# EUROPÄISCHE PATENTSCHRIFT

(11) **EP 1 780 872 B1**
(45) Veröffentlichungstag und Bekanntmachung des Hinweises auf die Patenterteilung: **01.03.2017**
(21) Anmeldenummer: 06015533.0
(22) Anmeldetag: 26.07.2006
(51) Int. Cl.: H02K 3/487, H02K 15/00

(54) **Elektromotor und Verfahren zu dessen Herstellung**
Electric motor and manufacturing method of the same
Moteur électrique et procédé de fabrication de celui-ci

(30) Priorität: 26.10.2005 DE 102005051245
(43) Veröffentlichungstag der Anmeldung: 02.05.2007
(73) Patentinhaber: Festool GmbH, 73240 Wendlingen am Neckar (DE)
(72) Erfinder: Fleischmann, Bernd, 73235 Weilheim (DE)
(74) Vertreter: Patentanwälte Bregenzer und Reule Partnerschaftsgesellschaft mbB

(56) Entgegenhaltungen:
- EP-A1- 1 376 822
- EP-A2- 1 215 801
- EP-A2- 1 300 924
- JP-A- H01 255 453
- JP-A- H04 364 343
- JP-A- 2003 235 193
- JP-A- 2004 112 856
- US-A- 3 963 949
- US-A1- 2003 214 197

## Beschreibung

Die Erfindung betrifft einen elektronisch kommutierten Elektromotor mit einem Rotor, gemäß dem Oberbegriff des Anspruchs 1 sowie ein Verfahren zur Herstellung eines solchen Elektromotors.

Ein derartiger Motor geht beispielsweise aus EP 1 300 924 A2 oder EP 1 215 801 A2 hervor. Der aus EP 1 300 924 A2 bekannte Motor hat einen im wesentlichen zylindrischen und aus einem Stück gebildeten Statorkern, während der Statorkern des Motors aus EP 1 215 801 A2 aus mehreren zusammengesetzten Kernen besteht. Schlitze in den Kernen sind jeweils durch Platten und eine Harzschicht verschlossen.

Bei einer Ausführungsform eines Elektromotors gemäß der deutschen Patentanmeldung 102 53 235.4 ist der Innenraum des Stators abgedichtet, so dass z.B. Fremdpartikel nicht in den Luftspalt zwischen Rotor und Stator eindringen können. Die Statorwicklungen sind in Nuten eingebracht, die außenseitig zwischen den Polkörpern des Statorkerns ausgebildet sind. Die Polkörper stehen radial nach außen vor. Über den fertig gewickelten Polkörper wird bei dem bekannten Elektromotor ein Rückschlussstück geschoben, wobei zwischen dem Blechpaket des Statorkerns und dem Rückschlusskörper bzw. der Rückschlusshülse ein Abstand sein kann, der zu magnetischen Verlusten führt. Ferner ist die Isolation der Statorwicklungen gegenüber dem Rückschlussteil bzw. der Rückschlusshülse problematisch herzustellen.

Es ist daher die Aufgabe der vorliegenden Erfindung, einen Elektromotor mit verbesserten mechanischen Eigenschaften bereitzustellen.

Zur Lösung der Aufgabe werden ein bürstenloser Elektromotor der gemäß der technischen Lehre des Anspruchs 1 und ein Verfahren gemäß der technischen Lehre des Anspruchs 15 vorgeschlagen.

Das erfindungsgemäße Verfahren sieht unter anderem vor, dass zunächst die Statorwicklungen in die Nuten des Statorkernes eingebracht werden, das heißt beispielsweise die Polkörper mit den Wicklungen umwickelt werden, und dass dann Kunststoffmaterial zur Bildung der Kunststoffstege angespritzt wird, um die Schlitze zu verschließen und somit Wickelkanäle zu schaffen, die gegenüber dem Innenraum verschlossen sind.

Somit wird verhindert, dass Fremdpartikel über die Nuten in den Innenraum gelangen und sich so in einem Luftspalt zwischen dem Rotor und dem Stator anlagern können. Dies wäre insbesondere deshalb problematisch, weil der Rotor eines elektrisch kommutierten Motors in der Regel permanentmagnetisches Material enthält.

Erfindungsgemäß wird eine Halterung an einer oder beiden Stirnseiten an den Statorkern angespritzt, die zweckmäßigerweise mit den Kunststoffstegen und/oder den Kunststoffauskleidungen einstückig ist.

Eine solche Halterung kann in einer Variante der Erfindung ein Lager für den Rotor halten, insbesondere ringförmig umfassen. Das Lager kann nachträglich in die Halterung einsetzt werden. Zweckmäßigerweise kann das Lager auch mit dem Kunststoffmaterial umspritzt sein, das die Halterung bildet. Das Lager wird beispielsweise in eine Spritzform eingelegt, bevor die Halterung gespritzt wird. Die Halterung kann beispielsweise eine Stirnwand des Statorinnenraums bilden.

Es ist aber auch möglich, dass in einer anderen Variante der Erfindung eine oder beide Halterungen eine Aufnahme für ein Lagerschild bilden, an dem der Motor gelagert ist. Das Lagerschild besteht zweckmäßigerweise aus demselben Kunststoffmaterial, das auch für die übrigen Spritzteile des Stators verwendet wird. Das Lagerschild wird zweckmäßigerweise durch Kleben und/oder Schweißen oder in sonstiger Weise staubdicht mit der Halterung verbunden. Beispielsweise wird zunächst der Rotor eingesetzt und sodann das jeweilige Lagerschild an dem Stator angeordnet und mit diesem verbunden. Auf diese Weise kann beispielsweise der Innenraum des Stators, in dem der Rotor aufgenommen ist, staubdicht gekapselt sein.

Bei dem Anspritzen von Kunststoffmaterial an den Statorkern können auch weitere Funktionsteile des Stators ausgebildet werden.

An dem Lagerschild und/oder an der Halterung ist zweckmäßigerweise mindestens ein Sensor angeordnet. Beispielsweise können eine oder mehrere Positionssensoren zur Erfassung der Position des Rotors, zweckmäßigerweise auch die zugeordnete Auswerteelektronik, den mindestens einen Sensor bilden. Auch Thermosensoren zur Temperaturerfassung des Stators können auf diesem Wege an dem Stator befestigt werden. Prinzipiell denkbar ist es auch, einen oder mehrere Sensoren in das Kunststoffmaterial einzuspritzen.

Der Luftspalt zwischen Rotor und Stator kann zur Erzielung optimaler elektrischer und magnetischer Eigenschaften des Elektromotors sehr klein sein.

Die Kunststoffstege trennen die Pole des Stators, so dass dort kein magnetischer Kurzschluss entsteht. Durch das Anspritzen des Kunststoffes werden zugleich die mechanischen Eigenschaften des Stators verbessert, so dass der erfindungsgemäße Stator einen kompakten, stabilen Statorkörper bildet

Die Polkörper stehen radial nach innen vor einen Jochring oder Rückschlussring des Statorkernes vor. Die Polkörper und der Jochring oder Rückschlusskörper sind vorteilhaft einstückig, so dass magnetische Verluste im Vergleich zur bekannten zweiteiligen Bauweise vermieden werden. Die Polkörper und der Jochring oder Rückschlusskörper sind zweckmäßigerweise durch in Achsrichtung des Rotors aufeinander geschichtete Bleche eines Blechpakets gebildet.

Weitere vorteilhafte Ausgestaltungen der Erfindung ergeben sich aus den abhängigen Ansprüchen sowie aus der nachfolgenden Beschreibung.

Zu dem Innenraum orientierte Frontseiten der Polkörper des Statorkerns sind zweckmäßigerweise ganz oder im Wesentlichen frei von dem Kunststoff und bilden zusammen mit den die Nuten verschließenden Kunststoffstegen eine vollständig, zumindest aber im Wesentlichen staubdichte Umfangswand des Innenraumes. Die Kunststoffstege und die Frontseiten der Polkörper gehen sozusagen nahtlos ineinander über. Dies wird durch das Spritzverfahren erreicht.

Die Nuten sind innenseitig zumindest teilweise mit einer elektrisch isolierenden Kunststoffauskleidung aus an den Statorkern angespritztem Kunststoffmaterial versehen. Die angespritzte Kunststoffauskleidung verbindet sich vorteilhafterweise mit dem Statorkern, was z.B. die mechanische Belastbarkeit des Statorkörpers verbessert.

Die Kunststoffstege sind an die Kunststoffauskleidungen der Nuten angespritzt. Das Herstellungsverfahren sieht vor, dass zunächst die Kunststoffauskleidungen an den Statorkern angespritzt werden, sodann die Statorwicklungen gewickelt werden und anschließend die Kunststoffstege gespritzt werden, so dass die Wickelkanäle gegenüber dem Innenraum verschlossen sind.

Zweckmäßigerweise sind auch die Stirnseiten der Polkörper zumindest teilweise mit einer elektrisch isolierenden Kunststoffverkleidung aus an dem Statorkern angespritztem Kunststoffmaterial versehen. Die stirnseitige Kunststoffverkleidung sowie die Auskleidung der Nuten wird vorteilhafterweise in einem einzigen Arbeitsgang an den Statorkern angespritzt, so dass die Stirnseiten-Kunststoffverkleidungen und die Nuten-Kunststoffauskleidungen einstückig sind. Besonders bevorzugt ist es, wenn die Polkörper ganz oder zumindest in denjenigen Bereichen, wo die Statorwicklungen zu liegen kommen, vollständig mit dem Kunststoffmaterial ummantelt sind.

Beim Anspritzen der Kunststoffstege ist es vorteilhaft, neben den Statorwicklungen in den Nuten Stäbe anzuordnen, die nach dem Anspritzen der Kunststoffstege entfernt werden. Die Stäbe bilden vorteilhaft Spritzformteile für die Kunststoffstege. Die Stäbe können beispielsweise von einer oder zweckmäßigerweise von beiden Stirnseiten her in die Nuten eingebracht werden, bevor der Spritzgang zur Bildung der die Nuten verschließenden Kunststege beginnt. Nach dem Spritzen der Kunststoffstege werden die Stäbe wieder entfernt, so dass in den Wickelkanälen Abstände zwischen den Statorwicklungen und den Kunststoffauskleidungen und/oder den Kunststoffstegen vorhanden sind, um Kühlluft durchzulassen. Eine bevorzugte Variante der Erfindung sieht vor, dass die Kunststoffstäbe von beiden Stirnseiten des Stators her in die Nuten eingesteckt werden, so dass die Stirnseiten der Stäbe aufeinander zu liegen kommen. In jedem Fall ist es zweckmäßig, darauf zu achten, dass die Stäbe Isolationen der Statorwicklungen, beispielsweise Lackisolationen oder dergleichen, nicht verletzen.

An mindestens einer Stirnseite des Stators sind vorteilhafterweise Vorsprünge zum Halten der Statorwicklungen und/oder zum Halten von Anschlusskontakten vorhanden, an die die Statorwicklungen elektrisch angeschlossen werden. Beispielsweise sind die Statorwicklungen um radial äußere stirnseitige Vorsprünge herumgewickelt, so dass die Statorwicklungen nicht in den Rotationsbereich des Motors und/oder der zweckmäßigerweise anzuspritzenden Halterungen gelangen können. Die Vorsprünge werden zweckmäßigerweise durch Kunststoffmaterial gebildet, das an den Statorkern angespritzt wird, z.B. in dem Arbeitsgang zur Bildung der Kunststoffauskleidungen der Nuten und/oder in dem Arbeitsgang zur Bildung der Kunststoffstege.

Nachfolgend wird ein Ausführungsbeispiel der Erfindung anhand der Zeichnung erläutert. Es zeigen:
- Figur 1: eine perspektivische Explosionsdarstellung eines erfindungsgemäßen Elektromotors,
- Figur 2: eine Seitenansicht des Elektromotors gemäß Figur 1,
- Figur 3: eine Querschnittsdarstellung des Motors gemäß Figur 2 entlang einer Linie A-A in Figur 2,

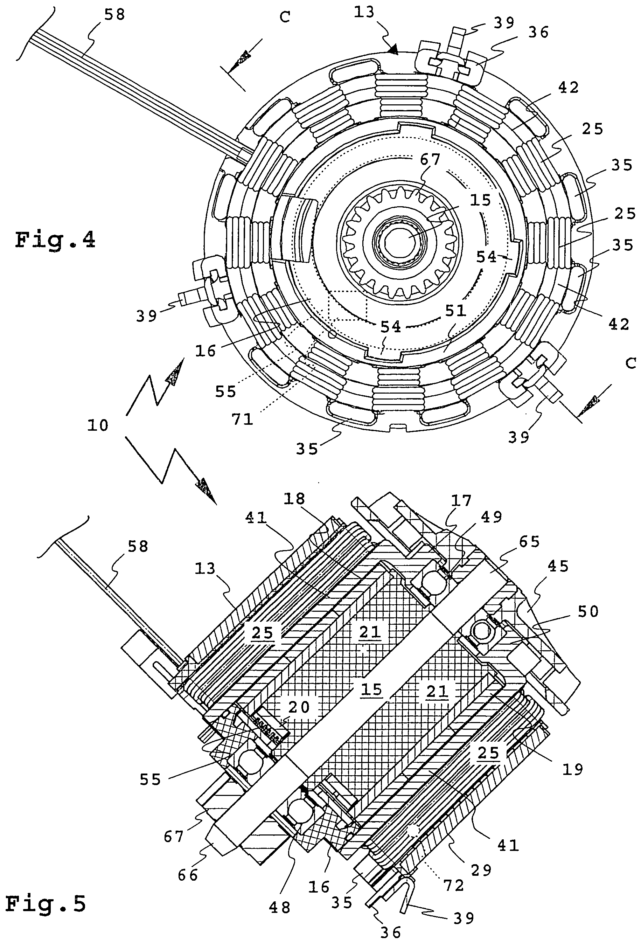

- Figur 4: eine Vorderansicht des Elektromotors gemäß Figuren 1 bis 3,
- Figur 5: einen Längsschnitt durch den Elektromotor gemäß Figur 4 entlang einer Linie C-C in Figur 4,

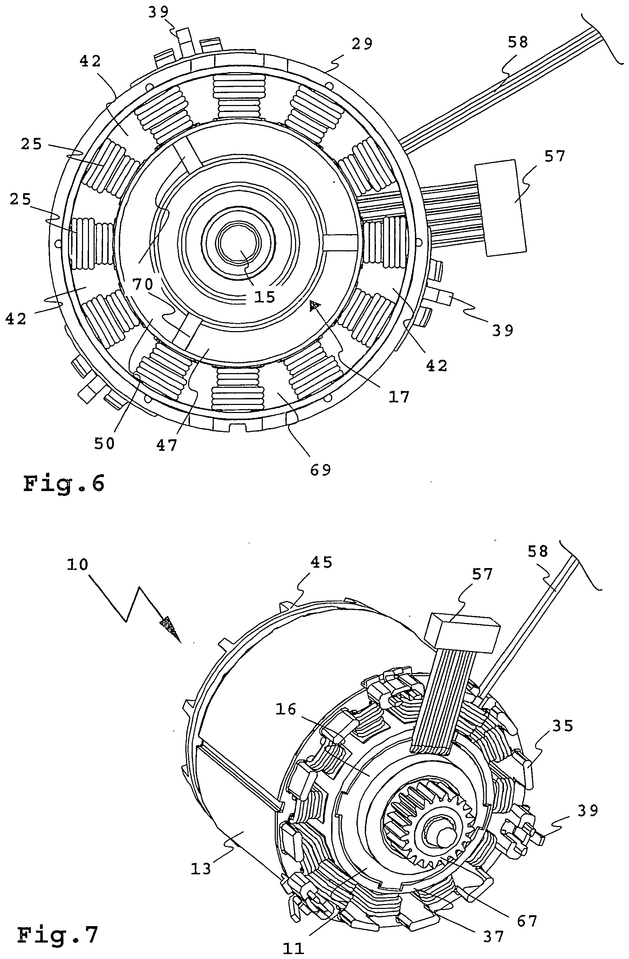

- Figur 6: eine hintere Ansicht des Elektromotors gemäß der vorhergehenden Figuren mit entferntem Lüfterrad,
- Figur 7: eine perspektivische Schrägdarstellung des Elektromotors gemäß der vorstehenden Figuren von vorn, und
- Figur 8: eine perspektivische Schrägdarstellung von hinten eines noch unbewickelten Stators des Elektromotors gemäß Figuren 1 bis 7.

Bei einem bürstenlosen und schleifringlosen, zweckmäßigerweise elektronisch kommutierten Elektromotor 10 ist ein Rotor 11 in einem Innenraum 12 eines Stators 13 angeordnet und an diesem drehbar gelagert. Der Stator 13 bildet zugleich ein Gehäuse 14 des Elektromotors 10, so dass dieser besonders kompakt baut. Eine Welle 15 des Rotos 11 durchdringt ein vorderes und ein hinteres Lagerschild 16, 17, die den Innenraum 12 stirnseitig begrenzen.

Der Elektromotor 10 bildet zweckmäßigerweise einen Bestandteil einer elektrischen Hand-Werkzeugmaschine 64, insbesondere eines Schraubers, eines Fräs- oder Schleifgeräts oder dergleichen.

Auf der Welle 15 ist ein Zylinder bzw. eine Trommel 18, zweckmäßigerweise aus Kunststoff, angeordnet, die als Träger für einen Stahlrückschlussring 19 dient, auf dem wiederum ein Magnetring 20 sitzt. Die Komponenten 19, 20 sind zweckmäßigerweise auf die Trommel 18 aufgepresst, aufgeklebt oder dergleichen. Zur Erzielung einer leichten Bauweise ist die Trommel 18 vorteilhaft innen im Wesentlichen hohl, wobei sich Verstärkungsrippen 21 zwischen der Welle 15 und einem Trommelring 22 der Trommel 18 erstrecken. Der Außenumfang des Trommelrings 22 enthält zweckmäßigerweise in der Figur nicht sichtbare Rippen, die sich in Achs- bzw. Längsrichtung 23 der Welle 15 erstrecken. Die Welle 15 besteht zweckmäßigerweise aus Metall, insbesondere aus Stahl.

Eine schematisch dargestellte Bestromungsvorrichtung 24 bestromt Statorwicklungen 25 des Stators 13 zur Erzeugung eines magnetischen Drehfelds, das den Rotor 11 antreibt. Die Statorwicklungen 25 sind um Polkörper 26 eines Statorkerns 27 des Stators 13 gewickelt.

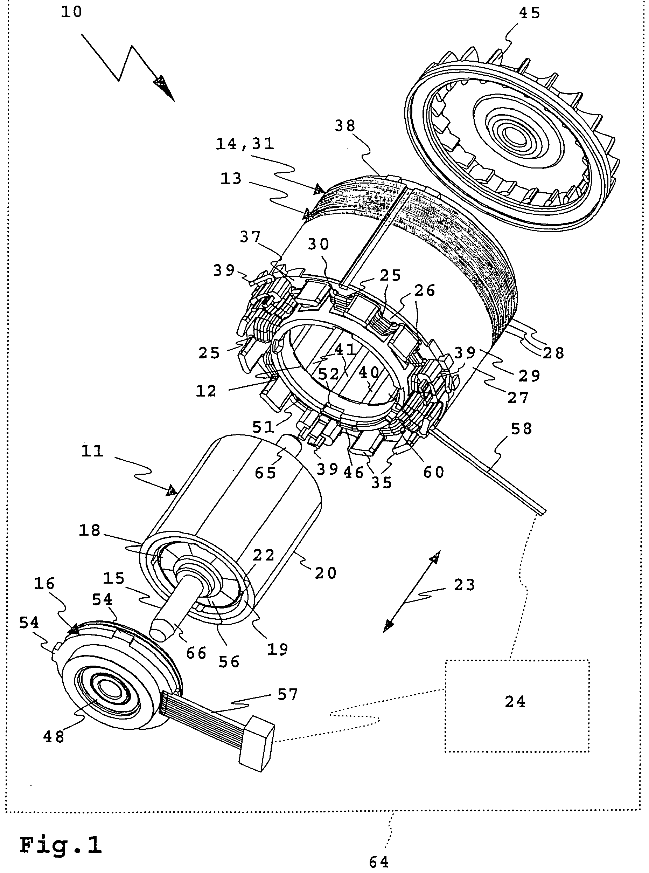

Der Statorkern 27 besteht aus einem magnetisierbaren Material, vorliegend beispielsweise aus Trafoblechen 28, die in Längsrichtung 23 aufeinander geschichtet und beispielsweise miteinander verschweißt und/oder verpresst sind. Jedenfalls bilden die Trafobleche 28 ein kompaktes Blechpaket. Aus Gründen der Vereinfachung sind die Trafobleche 28 nur in Figur 1 und dort nur im hinteren Bereich des Statorkerns 27 angedeutet.

Die Polkörper 26 sind einstückig mit einem Jochring bzw. Rückschlusskörper 29 und stehen nach radial innen von diesem ab, das heißt zum Innenraum 12 hin. Die Polkörper 26 sind zueinander beabstandet, so dass Nuten 30 gebildet sind, in denen die Statorwicklungen 25 angeordnet sind. Zum Innenraum 12 orientierte Schlitze 40 der Nuten 30 dienen zum Einbringen der Statorwicklungen 25.

Die Polkörper 26 haben einen T-förmigen Querschnitt, wobei seitliche Vorsprünge 61 die Schlitze 40 verengen, das heißt in Richtung der Schlitze 40 vorstehen. Dadurch werden die Statorwicklungen 25 besser in den Nuten 30 gehalten.

Im Rahmen eines zweckmäßigerweise zweistufigen Spritzgußverfahrens wird aus dem Statorkern 27 ein Statorkörper 31 gebildet, der kompakt baut und gut zu kühlen ist. Der Statorkörper 31 dichtet den Innenraum 12 ab und kapselt ihn. Die Kühlluft trägt Fremdpartikel, beispielsweise Eisenteile und dergleichen, nicht in den Innenraum 12 hinein, wo magentisierbare Fremdpartikel beispielsweise an dem Magnetring 20 anhaften würden.

In einem ersten Kunststoff-Spritzgang werden zunächst die Nuten 30 innenseitig mit einer Kunststoffauskleidung 32 versehen. Auch Stirnseiten 33 der Polkörper 26 werden vorteilhaft bei diesem Arbeitsgang mit einer Kunststoffverkleidung 34 versehen, so dass die Polkörper 26 vollständig mit Kunststoff ummantelt sind und die Statorwicklungen 25 elektrisch isoliert um die Polkörper 26 bzw. in die Nuten 30 gewickelt werden können.

Zweckmäßigerweise werden bereits bei dem ersten Kunststoff-Spritzgang an vordere und hintere Stirnseiten 37, 38 des Statorkerns 27 Vorsprünge 35, 36 und 63 angespritzt. Die Vorsprünge 35, 36, 63 dienen zum Halten der Statorwicklungen 25, wobei an den Vorsprüngen 36 zusätzlich Anschlusskontakte 39 zum elektrischen Anschluss der Statorwicklungen 25 angeordnet sind. Die Vorsprünge 35, 36 sind radial außen, in der Nähe des Außenumfanges des Stators 13 angeordnet und stehen in Längsrichtung 23 vor die Stirnseiten 37, 38 vor. Beispielsweise können die Statorwicklungen 25 bzw. diese verbindende Leitungsabschnitte außenseitig um die Vorsprünge 35, 36 herum gewickelt werden, so dass die Statorwicklungen 25 nicht in den Bereich des Innenraumes 12 gelangen, was für den nachfolgenden zweiten Spritzgang wesentlich ist.

Als zusätzliche, optionale Maßnahme ist vorgesehen, dass die Kunststoffauskleidungen 32 im Bereich der Schlitze 40 verengt sind, das heißt dass Vorsprünge 62 der Kunststoffauskleidungen 32 in Richtung der Schlitze 40 vorstehen.

Durch die seitlichen Vorsprünge 61, 62 sind Polschuhe gebildet, die später durch die Kunststoffstege 41 verschlossen werden.

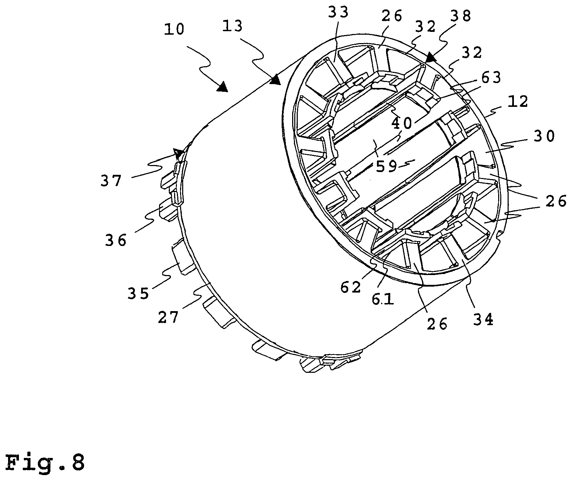

Nach Abschluss des ersten Spritzganges hat der Stator 13 die in Figur 8 gezeigte Ausbaustufe. Dann werden die Statorwicklungen 25 auf den in der oben beschriebenen Weise mit Kunststoff ummantelten Statorkern 27 vom Innenraum 12 her gewickelt. Dabei bilden die Vorsprünge 35, 36, 63 und die die Schlitze 40 verengenden Vorsprünge 62 Wickelhilfen.

Im Rahmen eines zweiten Spritzganges (es können prinzipiell auch weitere Spritzgänge vorgesehen sein) werden die zum Einbringen der Statorwicklungen 25 erforderlichen Schlitze 40 der Nuten 30 durch Kunststoffstege 41 aus an den Statorkern 27 angespritztem Kunststoffmaterial verschlossen, so dass die Statorwicklungen 25 in gegenüber dem Innenraum 12 verschlossenen Wickelkanälen 42 angeordnet sind.

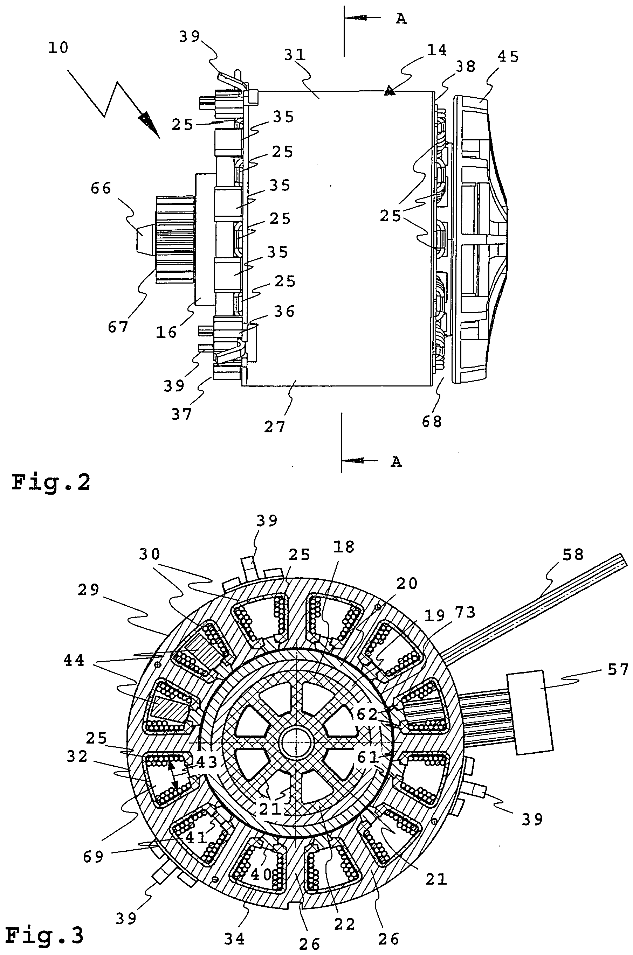

Zwischen einander gegenüberliegenden Statorwicklungen 25 dem angespritzten Kunststoffmaterial sind vorteilhaft Abstände 43 zum Durchlassen von Kühlluft vorhanden, die dadurch erzielt werden, dass Stäbe 44 - beispielhaft sind in Figur 2 nur zwei Stäbe 44 eingezeichnet - von beiden Stirnseiten 37, 38 her in den Wickelkanälen 42 neben den Statorwicklungen 25 angeordnet werden, so dass sich dort beim Spritzen kein Kunststoffmaterial anlagern kann. Dadurch liegen die Statorwicklungen 25 frei und es sind Kühlkanäle 69 vorhanden, die beim Betrieb des Elektromotors 10 von Kühlluft durchströmt werden.

Diese Kühlluft wird beispielsweise durch ein Lüfterrad 45 gefördert, das an einem das hintere Lagerschild 17 durchdringenden Abschnitt 65 der Welle 15 sitzt. Zwischen dem Lüfterrad 45 und dem Stator 13 ist zweckmäßigerweise ein Luftspalt 68 vorhanden.

An einem das vordere Lagerschild 16 durchdringenden Abschnitt 66 der Welle 15, der ein Abtriebsteil bildet, sitzt z.B. ein Ritzel 67. Das vordere Lagerschild 16 und zweckmäßigerweise das Ritzel 67 haben einen so kleinen Durchmesser, dass die Kühlkanäle 69 bzw. Wickelkanäle 42 durchströmende Kühlluft zumindest im wesentlichen ungehindert strömen kann.

Bei dem zweiten Spritzgang werden ferner an den Statorkern 27 vordere und hintere Halterungen 46, 47 aus Kunststoff für Lager 48, 49, z.B. Kugellager, zum Lagern des Rotors 11 angespritzt.

Die hintere Halterung 47 ist bildet das hintere Lagerschild 17, das heißt sie als eine Stirnwand 50 des Stator-Innenraumes 12 ausgebildet. Das hintere Lager 49 ist beim Spritzen der hinteren Halterung 47 in die Spritzform eingelegt. Die hintere Halterung 47 bzw. die Stirnwand 50 sind z.B. gestuft und/oder haben Vorsprünge, Ringe oder dergleichen zum Halten des Lager 49. Die Stirnwand 50 ist vorteilhaft durch Rippen 70 verstärkt.

Die vordere Halterung 46 ist als eine Aufnahme 51 für das Lagerschild 16 ausgestaltet, das das Lager 48 hält. Eine oder mehrere Ausnehmungen 52 an einem Aufnahmering 53 der Aufnahme 51 korrespondieren mit Vorsprüngen 54 am vorderen Lagerschild 16, so dass das Lagerschild 16 in einer vorbestimmten, korrekten Drehposition an dem Stator 13 anordenbar ist.

Diese exakte Drehpositionierung des Lagerschilds 16 ist im vorliegenden Fall besonders wichtig, weil in dem vorderen Lagerschild 16 eine schematisch dargestellte Sensoranordnung 55 mit Positionssensoren zur Positionserfassung bzw. Drehlagenerfassung des Rotors 11 angeordnet ist. In der Zeichnung nicht sichtbare Magnet-Sensoren der Sensoranordnung 55, die vorteilhafterweise auch eine Auswerteelektronik enthält, erfassen das Magnetfeld eines Positionsmagneten 56 des Rotors 11. Der Positionsmagnet 56 ist beispielsweise als Scheibe ausgestaltet und an der der Sensoranordnung 55 gegenüberliegend Stirnseite der Trommel 18 angeordnet.

Die Sensoranordnung 55 enthält zusätzlich zweckmäßigerweise mindestens einen Thermosensor 71 zur Temperaturerfassung des Elektromotors 10. Die Sensoranordnung 55 ist über eine Leitung 57 beispielsweise mit der Bestromungsvorrichtung 24 verbindbar.

Es können optional schematisch dargestellte Temperatursensoren 72 im Bereich der Statorwicklungen 25 angeordnet sein, die mittels Leitungen 58 mit der Bestromungsvorrichtung 24 verbindbar sind.

Die Kunststoffstege 41 stehen nicht vor die Polkörper 26 in den Innenraum 12 vor. Zum Innenraum 12 orientierte Frontseiten 59 der Polkörper 26 sind frei von Kunststoff. Die Frontseiten 59 und die Kunststoffstege 41 bilden eine staubdichte Umfangswand 60 des Innenraums 12, wobei sich Kunststoffmaterial und magnetisierbares Trafoblech abwechseln.

Die Umfangswand 60, insbesondere die Kunststoffstege 41, erstrecken sich, vorteilhafterweise glatt und übergangslos, nach vorn zur Halterung 46 und nach hinten zur hinteren Halterung 47 und Stirnwand 50. Durch die homogene, gleichmäßige Oberfläche der Umfangswand 60 ist es möglich, dass der Rotor 11 mit einem engen (in der Zeichnung nicht sichtbaren) Luftspalt 73, beispielsweise 0,2 - 0,3 Millimeter im Innenraum 12 montiert wird. Sodann wird das vordere Lagerschild 16 in die Aufnahme 51 eingesetzt und zweckmäßigerweise staubdicht verbunden, beispielsweise verklebt, verschweißt, warm verprägt oder dergleichen. Es versteht sich, dass auch eine Schraubverbindung möglich ist, wobei die zuerst genannten Verbindungsarten eine besonders kompakte Bauweise ermöglichen.

Die Vorsprünge 63 zum Halten der Statorwicklungen 25 sind an der hinteren Stirnseite 38 angeformt, vorzugsweise aus Kunststoffmaterial angespritzt. Die Vorsprünge 63 sind radial innen angeordnet und verhindern ein Rutschen der Statorwicklungen 25 nach radial innen. Die seitlichen Vorsprünge 62 entlang der Schlitze 40 sind in Richtung der hinteren Vorsprünge 63 verlängert. Bei dem zweiten Kunststoff-Spritzgang werden die Vorsprünge 63 vorteilhaft in die hintere Halterung 47 bzw. die hintere Stirnwand 50 sozusagen integriert, so dass diese Bauteile einstückig sind.

Nach dem zweiten Kunststoff-Spritzgang sind die Stirnseiten 37, 38 ganz oder fast vollständig mit Kunststoff bedeckt, so dass der Statorkern 27 zusammen mit dem Kunststoffmaterial und dem Lagerschild 16 das Gehäuse 14 des Elektromotors 10 bildet.

Für sämtliche Kunststoff-Spritzgänge wird zweckmäßigerweise dasselbe Kunststoffmaterial verwendet, so dass sich die einzelnen Bestandteile, die in zwei oder mehr Kunststoff-Spritzgängen erzeugt werden, homogen verbinden und ein stabiler Statorkörper 31 gebildet wird.

## Patentansprüche

1. Elektronisch kommutierter Elektromotor mit einem Rotor (11), der in einem Innenraum (12) eines Stators (13) mit einem Statorkern (27) aus magnetisierbarem Material angeordnet und an dem Stator (13) drehbar gelagert ist, wobei Statorwicklungen (25) in Nuten (30) des Statorkerns angeordnet sind, die zwischen Pole bildende Polkörpern (26) des Statorkerns (27) vorhanden sind, wobei die Nuten (30) zum Einbringen der Statorwicklungen (25) zum Innenraum (12) orientierte Schlitze (40) aufweisen, die durch Kunststoffstege (41) aus an den Statorkern (27) angespritztem Kunststoffmaterial verschlossen sind, so dass die Statorwicklungen (25) in gegenüber dem Innenraum (12) verschlossenen Wickelkanälen (42) angeordnet sind, **dadurch gekennzeichnet, dass** die Nuten (30) innenseitig zumindest teilweise mit einer elektrisch isolierenden Kunststoffauskleidung (32) aus an den Statorkern (27) angespritztem Kunststoffmaterial versehen sind und die Kunststoffstege (41) an die Kunststoffauskleidung (32) angespritzt sind, und dass mindestens eine Halterung (46, 47) aus Kunststoffmaterial an mindestens eine Stirnseite des Statorkerns (27) angespritzt ist, wobei die mindestens eine Halterung (46, 47) ein Lager für den Rotor (11) hält oder eine Aufnahme (51) für ein Lagerschild (16) bildet, an dem der Rotor (11) gelagert ist.

2. Elektromotor nach Anspruch 1, **dadurch gekennzeichnet, dass** zu dem Innenraum (12) orientierte Frontseiten (59) der Polkörper (26) des Statorkerns (27) zumindest im Wesentlichen frei von dem Kunststoff sind und zusammen mit den Kunststoffstegen (41) eine staubdichte Umfangswand (60) des Innenraums (12) bilden.

3. Elektromotor nach einem der vorhergehenden Ansprüche, **dadurch gekennzeichnet, dass** in den Wickelkanälen (42) zwischen den Statorwicklungen (25) und den Kunststoffstegen (41) und/oder den Kunststoffauskleidungen (32) Abstände (43) zum Durchlassen von Kühlluft vorhanden ist.

4. Elektromotor nach einem der vorhergehenden Ansprüche, **dadurch gekennzeichnet, dass** Stirnseiten (33) der Polkörper (26) zumindest teilweise mit einer elektrisch isolierenden Kunststoffverkleidung (34) aus an den Statorkern (27) angespritztem Kunststoffmaterial versehen sind.

5. Elektromotor nach einem der vorhergehenden Ansprüche, **dadurch gekennzeichnet, dass** die mindestens eine Halterung (46, 47) aus Kunststoffmaterial insbesondere an die Kunststoffstege (41) und/oder die Kunststoffauskleidungen (32) der Nuten (30) angespritzt ist.

6. Elektromotor nach einem der vorhergehenden Ansprüche, **dadurch gekennzeichnet, dass** die mindestens eine Halterung (46, 47) als eine Stirnwand (50) des Stator-Innenraums (12) ausgestaltet ist.

7. Elektromotor nach einem der vorhergehenden Ansprüche, **dadurch gekennzeichnet, dass** das Lagerschild (16), insbesondere durch warm Verprägen und/oder Kleben und/oder Schweißen, staubdicht mit der Halterung (46, 47) verbunden ist.

8. Elektromotor nach einem der vorhergehenden Ansprüche, **dadurch gekennzeichnet, dass** an dem Lagerschild (16) und/oder der mindestens einen Halterung (46, 47) mindestens ein Sensor (71) angeordnet ist.

9. Elektromotor nach einem der vorhergehenden Ansprüche, **dadurch gekennzeichnet, dass** der Innenraum (12) des Stators (13) für den Rotor (11) staubdicht gekapselt ist.

10. Elektromotor nach einem der vorhergehenden Ansprüche, **dadurch gekennzeichnet, dass** an mindestens einer Stirnseite (37, 38) des Stators (13) Vorsprünge (35, 36, 63) zum Halten der Statorwicklungen (25) und/oder von Anschlusskontakten (39) zum elektrischen Anschluss der Statorwicklungen (25) angeordnet sind.

11. Elektromotor nach Anspruch 10, **dadurch gekennzeichnet, dass** die Vorsprünge (35, 36, 63) aus an den Statorkern (27) angespritztem Kunststoffmaterial sind.

12. Elektromotor nach einem der vorhergehenden Ansprüche, **dadurch gekennzeichnet, dass** der Statorkern (27) im Bereich der Statorwicklungen (25) vollständig von dem Kunststoffmaterial umgeben ist.

13. Elektromotor nach einem der vorhergehenden Ansprüche, **dadurch gekennzeichnet, dass** die Polkörper (26) nach radial innen vor einen Jochring des Statorkerns (27) vorstehen.

14. Handwerkzeugmaschine, insbesondere Bohrer, Schrauber oder Schleifmaschine mit einem Elektromotor (10) nach einem der vorhergehenden Ansprüche.

15. Verfahren zur Herstellung eines Stators (13) für einen elektronisch kommutierten Elektromotor (10) mit einem Rotor (11), der in einem Innenraum (12) des Stators (13) mit einem Statorkern (27) aus magnetisierbarem Material angeordnet und an dem Stator (13) drehbar gelagert ist, mit den Schritten:
- Wickeln von Statorwicklungen (25) in Nuten (30) des Statorkerns (27), die zwischen Pole bildende Polkörpern (26) des Statorkerns (27) vorhanden sind, wobei die die Nuten (30) zum Einbringen der Statorwicklungen (25) zum Innenraum (12) orientierte Schlitze (40) aufweisen, und
- Anspritzen von Kunststoffmaterial an den Statorkern (27) zur Bildung von Kunststoffstegen (41), um die Schlitze (40) zu verschließen, so dass die Statorwicklungen (25) in gegenüber dem Innenraum (12) verschlossenen Wickelkanälen (42) angeordnet sind,
**gekennzeichnet**
- **durch** Anspritzen von Kunststoffmaterial an den Innenseiten der Nuten (30) des Statorkerns (27) vor dem Einbringen der Statorwicklungen (25), so dass die Nuten (30) innenseitig zumindest teilweise mit einer elektrisch isolierenden Kunststoffauskleidung (32) aus an den Statorkern (27) angespritztem Kunststoffmaterial versehen sind, wobei die Kunststoffstege (41) an die Kunststoffauskleidung (32) angespritzt sind,
- und **durch** Anspritzen mindestens einer Halterung (46, 47) aus Kunststoffmaterial an mindestens eine Stirnseite des Statorkerns (27), wobei die mindestens eine Halterung (46, 47) ein Lager für den Rotor (11) hält oder eine Aufnahme (51) für ein Lagerschild (16) bildet, an dem der Rotor (11) gelagert ist.

16. Verfahren nach Anspruch 15, **dadurch gekennzeichnet, dass** bei dem Anspritzen der Kunststoffstege (41) Stäbe (44) in den Nuten (30) neben den Statorwicklungen (25) angeordnet sind, die nach dem Anspritzen entfernt werden, so dass neben den Statorwicklungen (25) jeweils ein Abstand (43) zum Durchlassen von Kühlluft vorhanden ist.

## Claims

1. Electronically commutated electric motor with a rotor (11) which is located in an internal space (12) of a stator (13) with a stator core (27) of magnetisable material and is rotatably mounted on the stator (13), wherein stator windings (25) are fitted in slots (30) of the stator core which are to be found between pole bodies (26) of the stator core (27) which form poles, wherein the slots (30) have slits (40) oriented towards the internal space (12) for insertion of the stator windings (25) and which are sealed by plastic webs (41) made of plastic material integrally extruded with the stator core (27), so that the stator windings (25) are fitted in winding channels (42) sealed against the internal space (12), **characterised in that** the slots (30) are provided on the inside at least partly with an electrically insulating plastic lining (32) made of plastic material integrally extruded with the stator core (27), and the plastic webs (41) are integrally extruded with the plastic lining (32), and that at least one holder (46, 47) of plastic material is integrally extruded with at least one end face of the stator core (27), wherein the holder or holders (46, 47) holds or holds a bearing for the rotor (11) or forms or form a seating (51) for a bearing shield (16) on which the rotor (11) is mounted.

2. Electric motor according to claim 1, **characterised in that** front faces (59) of the pole bodies (26) of the stator core (27) oriented towards the internal space (12) are at least substantially free from the plastic and, together with the plastic webs (41), form a dustproof peripheral wall (60) of the internal space (12).

3. Electric motor according to any of the preceding claims, **characterised in that** spaces (43) for the passage of cooling air are provided in the winding channels (42) between the stator windings (25) and the plastic webs (41) and/or the plastic linings (32).

4. Electric motor according to any of the preceding claims, **characterised in that** end faces (33) of the pole bodies (26) are provided at least partly with an electrically insulating plastic sheathing (34) made of plastic material integrally extruded with the stator core (27).

5. Electric motor according to any of the preceding claims, **characterised in that** the holder or holders (46, 47) is or are of plastic material, in particular integrally extruded with the plastic webs (41) and/or the plastic linings (32) of the slots (30).

6. Electric motor according to any of the preceding claims, **characterised in that** holder or holders (46, 47) is or are in the form of an end face (50) of the stator internal space (12).

7. Electric motor according to any of the preceding claims, **characterised in that** the bearing shield (16) has a dustproof connection with the holder (46, 47), in particular made by stamping and/or bonding and/or welding.

8. Electric motor according to any of the preceding claims, **characterised in that** at least one sensor (71) is provided on the bearing shield (16) and/or the holder or holders (46, 47).

9. Electric motor according to any of the preceding claims, **characterised in that** the internal space (12) of the stator (13) has a dustproof encapsulation for the rotor (11).

10. Electric motor according to any of the preceding claims, **characterised in that** projections (35, 36, 63) for holding the stator windings (25) and/or connection contacts (39) for the electrical connection of the stator windings (25) are provided on at least one end face (37, 38) of the stator (13).

11. Electric motor according to claim 10, **characterised in that** the projections (35, 36, 63) are made of plastic material integrally extruded with the stator core (27).

12. Electric motor according to any of the preceding claims, **characterised in that** the stator core (27) is completely encompassed by the plastic material in the area of the stator windings (25).

13. Electric motor according to any of the preceding claims, **characterised in that** the pole bodies (26) extend radially inwards in front of a yoke ring of the stator core (27).

14. Hand-operated power tool, in particular a drill, screwdriver or grinding machine, with an electric motor (10) according to any of the preceding claims.

15. Method for the manufacture of a stator (13) for an electronically commutated electric motor with a rotor (11) which is located in an internal space (12) of a stator (13) with a stator core (27) of magnetisable material and is rotatably mounted on the stator (13), with the steps:
- winding of stator windings (25) in slots (30) of the stator core which are to be found between pole bodies (26) of the stator core (27) which form poles, wherein the slots (30) have slits (40) oriented towards the internal space (12) for insertion of the stator windings (25) and
- integral extrusion of plastic material on the stator core (27) to form plastic webs (41) in order to seal the slits (40, so that the stator windings (25) are fitted in winding channels (42) sealed against the internal space (12), **characterised**
- **by** integral extrusion of plastic material on the insides of the slots (30) of the stator core (27) before insertion of the stator windings (25), so that the slots (30) are provided on the inside at least partly with an electrically insulating plastic lining (32) made of plastic material integrally extruded with the stator core (27), wherein the plastic webs (41) are integrally extruded with the plastic lining (32),
- and by integral extrusion of at least one holder (46, 47) of plastic material on at least one end face of the stator core (27), wherein the holder or holders (46, 47) holds or holds a bearing for the rotor (11) or forms or form a seating (51) for a bearing shield (16) on which the rotor (11) is mounted.

16. Method according to claim 15 **characterised in that**, during integral extrusion of the plastic webs (41), rods (44) are provided in the slots (30) alongside the stator windings (25) and removed after extrusion so that in each case a space (43) for the passage of cooling air is available next to the stator windings (25).

## Revendications

1. Moteur électrique à commutation électronique comprenant un rotor (11), qui est disposé dans un espace intérieur (12) d'un stator (13) pourvu d'un noyau de stator (27) composé d'un matériau magnétisable et qui est monté de manière à pouvoir tourner au niveau du stator (13), dans lequel des enroulements de stator (25) sont disposés dans des rainures (30) du noyau de stator, lesquelles sont présentes entre des corps de pôle (26), formant des pôles, du noyau de stator (27), dans lequel les rainures (30) présentent, afin d'introduire les enroulements de stator (25), des entailles (40) orientées en direction de l'espace intérieur (12), lesquelles sont fermées par des entretoises en plastique (41) composées d'un matériau en plastique moulé par injection au niveau du noyau de stator (27) de sorte que les enroulements de stator (25) sont disposés dans des canaux d'enroulement (42) fermés par rapport à l'espace intérieur (12), **caractérisé en ce que** les rainures (30) sont pourvues, côté intérieur, au moins en partie d'un habillage en plastique (32) électriquement isolant composé d'un matériau en plastique moulé par injection au niveau du noyau de stator (27), et les entretoises en plastique (41) sont moulées par injection au niveau de l'habillage en plastique (32), et **en ce qu'**au moins un support (46, 47) composé d'un matériau en plastique est moulé par injection au niveau au moins d'un côté frontal du noyau de stator (27), dans lequel l'au moins un support (46, 47) maintient un palier pour le rotor (11) ou forme un logement (51) pour un flasque (16), au niveau duquel le rotor (11) est monté.

2. Moteur électrique selon la revendication 1, **caractérisé en ce que** des côtés frontaux (59), orientés en direction de l'espace intérieur (12), des corps de pôle (26) du noyau de stator (27) sont au moins sensiblement sans plastique et forment, conjointement avec les entretoises en plastique (41), une paroi périphérique (60) étanche aux poussières de l'espace intérieur (12).

3. Moteur électrique selon l'une quelconque des revendications précédentes, **caractérisé en ce que** des espacements (43) servant à laisser passer de l'air de refroidissement sont prévus dans les canaux d'enroulement (42) entre les enroulements de stator (25) et les entretoises en plastique (41) et/ou les habillages en plastique (32).

4. Moteur électrique selon l'une quelconque des revendications précédentes, **caractérisé en ce que** des côtés frontaux (33) des corps de pôle (26) sont pourvus au moins en partie d'un habillage en plastique (34) électriquement isolant composé d'un matériau en plastique moulé par injection au niveau du noyau de stator (27).

5. Moteur électrique selon l'une quelconque des revendications précédentes, **caractérisé en ce que** l'au moins un support (46, 47) composé d'un matériau en plastique est moulé par injection en particulier au niveau des entretoises en plastique (41) et/ou des habillages en plastique (32) des rainures (30).

6. Moteur électrique selon l'une quelconque des revendications précédentes, **caractérisé en ce que** l'au moins un support (46, 47) est configuré sous la forme d'une paroi frontale (50) de l'espace intérieur de stator (12).

7. Moteur électrique selon l'une quelconque des revendications précédentes, **caractérisé en ce que** le flasque (16) est relié, de manière étanche aux poussières, au support (46, 47) en particulier par un estampage à chaud et/ou par collage et/ou par soudage.

8. Moteur électrique selon l'une quelconque des revendications précédentes, **caractérisées en ce qu'**au moins un capteur (71) est disposé au niveau du flasque (16) et/ou au niveau de l'au moins un support (46, 47).

9. Moteur électrique selon l'une quelconque des revendications précédentes, **caractérisé en ce que** l'espace intérieur (12) du stator (13) pour le rotor (11) est encapsulé de manière étanche aux poussières.

10. Moteur électrique selon l'une quelconque des revendications précédentes, **caractérisé en ce que** des parties faisant saillie (35, 36, 63) servant à maintenir les enroulements de stator (25) et/ou de contacts de raccordement (39) servant au raccordement électrique des enroulements de stator (25) sont disposées au niveau au moins d'un côté frontal (37, 38) du stator (13).

11. Moteur électrique selon la revendication 10, **caractérisé en ce que** les parties faisant saillie (35, 36, 63) sont composées d'un matériau en plastique moulé par injection au niveau du noyau de stator (27).

12. Moteur électrique selon l'une quelconque des revendications précédentes, **caractérisé en ce que** le noyau de stator (27) est entouré en totalité du matériau en plastique dans la zone des enroulements de stator (25).

13. Moteur électrique selon l'une quelconque des revendications précédentes, **caractérisé en ce que** les corps de pôle (26) font saillie vers l'intérieur radialement d'un anneau de culasse du noyau de stator (27).

14. Machine-outil, en particulier perceuse, visseuse ou ponceuse, comprenant un moteur électrique (10) selon l'une quelconque des revendications précédentes.

15. Procédé servant à fabriquer un stator (13) pour un moteur électrique (10) à commutation électronique comprenant un rotor (11), qui est disposé dans un espace intérieur (12) du stator (13) pourvu d'un noyau de stator (27) composé d'un matériau magnétisable et qui est monté de manière à pouvoir tourner au niveau du stator (13), comprenant les étapes consistant à :
- enrouler des enroulements de stator (25) dans des rainures (30) du noyau de stator (27), qui sont présentes entre des corps de pôle (26), formant des pôles, du noyau de stator (27), dans lequel les rainures (30) présentent, afin d'introduire les enroulements de stator (25), des entailles (40) orientées en direction de l'espace intérieur (12) ; et
- mouler par injection un matériau en plastique au niveau du noyau de stator (27) afin de former des entretoises en plastique (41) afin de fermer les entailles (40) de sorte que les enroulements de stator (25) sont disposés dans des canaux d'enroulement (42) fermés par rapport à l'espace intérieur (12),
**caractérisé par**
- l'action de mouler par injection un matériau en plastique au niveau des côtés intérieurs des rainures (30) du noyau de stator (27) avant l'introduction des enroulements de stator (25) de sorte que les rainures (30) sont pourvues côté intérieur au moins en partie d'un habillage en plastique (32) électriquement isolant composé d'un matériau en plastique moulé par injection au niveau du noyau de stator (27), dans lequel les entretoises en plastique (41) sont injectées au niveau de l'habillage en plastique (32),
- et par l'action de mouler par injection au moins un support (46, 47) composé d'un matériau en plastique au niveau au moins d'un côté frontal du noyau de stator (27), dans lequel l'au moins un support (46, 47) maintient un palier pour le rotor (11) ou forme un logement (51) pour un flasque (16), au niveau duquel le rotor (11) est monté.

16. Procédé selon la revendication 15, **caractérisé en ce que** lors du moulage par injection des entretoises en plastique (41), des barres (44) sont disposées dans les rainures (30) à côté des enroulements de stator (25), lesquelles sont retirées après le moulage par injection, de sorte que respectivement un espacement (43) servant à laisser passer de l'air de refroidissement est présent à côté des enroulements de stator (25).
